# EUROPEAN PATENT SPECIFICATION

(11) **EP 2 687 979 B1**
(45) Date of publication and mention of the grant of the patent: **23.08.2017**
(21) Application number: 13177196.6
(22) Date of filing: 19.07.2013
(51) Int. Cl.: G06F 3/14, G06F 9/44

(54) **Method and device for sharing content**
Verfahren und Vorrichtung zur gemeinsamen Nutzung von Inhalt
Procédé et dispositif pour le partage de contenu

(30) Priority: 20.07.2012 KR 20120079584
(43) Date of publication of application: 22.01.2014
(60) Divisional application: 17173789.3
(73) Proprietor: Samsung Electronics Co., Ltd., Gyeonggi-do 443-742 (KR)
(72) Inventor: Yook, Hyung-gyoo, Seoul (KR); Kim, So-jin, Gyeonggi-do (KR)
(74) Representative: HGF Limited

(56) References cited:
- US-A- 5 996 002
- US-A1- 2004 024 819
- US-A1- 2006 053 380
- US-A1- 2007 156 689
- US-A1- 2009 322 789
- US-A1- 2012 098 733
- US-B1- 6 934 737
- US-B1- 8 046 698

## Description

### BACKGROUND

### 1. Field

Apparatuses and methods consistent with exemplary embodiments relate to sharing a content output screen, and more particularly, to sharing a content output screen among a plurality of devices by changing control authority of a device, which shares the content output screen, according to an input regarding the device and providing additional information regarding shared content.

### 2. Description of the Related Art

Electronic conference systems allow users of a plurality of devices to view the same screen by outputting a content output screen of one device on the other devices.

Methods of outputting a content output screen on a plurality of devices include a method in which a plurality of devices access one device via a network, receive information regarding the content output screen, and output the same screen, and a method in which a plurality of devices access a server and share content stored in the server, and the server controls the content.

According to the above methods, a plurality of devices may share the same content output screen. However, users may not easily and arbitrarily change control authority of a certain device on a screen sharing service, or a certain device may not easily provide additional information as control is relegated to a particular device or server as noted above.

US-2012/098733-A1 discloses a screen sharing system includes information processing apparatuses that display the same content on their respective screens as a shared screen. Each of the information processing apparatuses includes an operation right switching unit configured to acquire an operation right, a transmission data generating unit configured to generate transmission data including operational information of an input operation, and a drawing unit configured to draw a display object on the screen. At a transmitting information processing apparatus with the operation right, the drawing unit draws the display object according to the operational information, and the transmission data generating unit generates the transmission data including the operational information and sends the transmission data to a receiving information processing apparatus without the operation right.; At the receiving information processing apparatus, the drawing unit draws the display object according to the operational information in the transmission data received from the transmitting information processing apparatus.

US-2007/156689-A1 discloses an architecture that allows users in an application sharing environment to separately view portions of data that are not part of the current shared view. An enhanced application sharing component is provided that facilitates rendering the application data multiple times for a correspondingly similar number of simultaneous users, and sending the additional renderings to the other users for interaction. Each user client includes an application sharing viewer that composites the per-user renderings onto the base shared image of the user client to create a per-user view of the shared document. The enhanced sharing component renders the portion of the data that is requested by the remote user as a bitmap and passes the bitmap along with coordinate information to the client rendering program presentation with the shared data view. The coordinate information indicates where on the shared screen of the remote client the bitmap is overlayed to produce a seamless experience.

US-2004/024819-A1 discloses an apparatus for controlling a shared screen for shared applications, which can be shared, in a network system of a plurality of connected communication terminals, with other communication terminals when running on the terminals. The communication terminals include a window information acquiring portion for acquiring window information of the application to be shared while running on the terminals. Window controlling portion controls how windows are displayed on the communication terminals. The window controlling portion displays a window of shared space for displaying windows of shared applications collectively on the communication terminals. The windows of the shared applications are displayed as sub-windows in the window of shared space. For the "entire screen sharing type", the apparatus includes a conference managing device having a conference information managing portion for managing information about communication terminals participating in those conferences, and shared screen controlling portion. An unused terminal for providing a shared screen is dynamically selected and provided. With the "application sharing method", it can be recognized easily, whether a displayed application window is shared or unshared, and with the "entire screen sharing method", a terminal for providing a shared screen can be selected optimally, so that the system resource can be used efficiently.

US-2006/053380-A1 discloses systems and methods that provide a client-server infrastructure capable of supporting a variety of asynchronous and synchronous collaboration activities in a so-called collaboration place. Some of these activities include chatting, viewing and/or editing one or more data files, and sharing one or more applications, data files, and/or displays. The client-server infrastructure supports seamless navigation between the supported asynchronous and synchronous activities in the collaboration place. Additionally, the client-server architecture supports data persistence, so that data files associated with the collaboration place can be stored for subsequent access.

US-8046698-B1 discloses a visual server system includes a visual server that provides graphics images through execution of a graphics application. A local terminal may interact with the graphics application through a server application in response to possession of input control. A remote client terminal may interact with the graphics application through a session application in response to possession of the input control. The input control is passed between the local terminal and the remote client terminal in order to provide collaboration of a graphics session. The local terminal and the remote client terminal receive the same view of the graphics application. Interactions with the graphics application performed by either the local terminal or the remote client terminal are viewable by the other terminal. Interactions with the graphics application by either the local terminal or the remote client terminal that does not have the input control are blocked.

US-2009/322789-A1 discloses a method of allocating a display screen into two areas when the display screen is pivoted from a landscape orientation to a portrait orientation. A hypervisor receives a pivot request (e.g., from a user) to pivot the display screen from a landscape orientation to a portrait orientation. When the display screen is oriented in the landscape orientation, a primary operating system displays its data on the display screen. Upon reception of the pivot request, the hypervisor allocates the display screen into a primary display area and a secondary display area. The hypervisor then displays data originating from the primary operating system in the primary display area and displays data originating from a second operating system in the secondary display area.

### SUMMARY

One or more exemplary embodiments provide a method and device for setting control authority of a screen sharing service according to a request by a user for setting one of a plurality of devices, which share content, to have control authority of the screen sharing service and by restricting control authority of the other devices on the screen sharing service.

One or more exemplary embodiments also provide a method and device for providing additional information regarding content to a user by setting control authority of a screen sharing service.

According to a first aspect of the present invention, there is provided a method for sharing content with an external device, the method comprising: displaying content on a display of a user device and sharing the content with the external device screen by using a screen sharing service; setting the user device to have control authority of the screen sharing service based on a user input; transmitting control authority setup information indicating that the user device has the control authority of the screen sharing service; transmitting a control command to the external device for controlling the shared content at the external device according to the control authority of the screen sharing service; and periodically transmitting to the external device control authority maintaining information indicating that the user device continues to be set as having the control authority of the screen sharing service

According to a second aspect of the present invention there is provided a user device comprising: a content sharing unit; a display; and a control unit configured to control the content sharing unit to share content with an external device by using a screen sharing service; control the display to display the shared content; set the user device to have control authority of the screen sharing service based on a user input; control the content sharing unit to transmit, to the external device, control authority setup information indicating that the user device has the control authority of the screen sharing service; control the content sharing unit to transmit a control command to the external device for controlling content shared with the external device according to the control authority of the screen sharing service; and control the content sharing unit (940) to periodically transmit to the external device control authority maintaining information indicating that the user device continues to be set as having the control authority of the screen sharing service.

According to a third aspect of the present invention there is provided a method for sharing content with an external device, the method comprising: receiving at a user device content which is shared with an external device from a server by using a screen sharing service; transmitting to a the server information requesting the user device to have the control authority of the screen sharing service; receiving from the server authorization that the user device has the control authority of the screen sharing service; setting the user device to have control authority of the screen sharing service based on received control authorization from the server; transmitting a control command for controlling the shared content at the external device to the server, based on the control authority of the screen sharing service; and periodically transmitting to the server control authority maintaining information indicating that the user device continues to be set as having the control authority of the screen sharing service.

According to a fourth aspect of the present invention there is provided a user device comprising: a content reception unit; a display; and a control unit configured to receive content which is shared with an external device from a server by using a screen sharing service; control the display to display the shared content; control the content reception unit to transmit information requesting the user device have the control authority of the screen sharing service, to the server; control the content reception unit to receive authorization of the control authority from the server; setting the user device to have control authority of the screen sharing service based on received control authorization from the server; control the content reception unit to transmit a control command for controlling the shared content at the external device to the server based on the set control authority of the screen sharing service; and control the content reception unit to periodically transmit to the server control authority maintaining information indicating that the user device continues to be set as having the control authority of the screen sharing service.

The server control method may further include periodically receiving control authority maintaining information, from the user device, for maintaining control authority by the user device of the screen sharing service; and, releasing control authority of the user device on the screen sharing service if the control authority maintaining information is not received for a predetermined period of time.

The server control method may further include receiving information requesting to set an external device among the plurality of devices to entirely or partially have control authority, from the user device having control authority; and setting the external device to entirely or partially have control authority of the screen sharing service, according to the received information requesting to set control authority.

The server control method may further include, transmitting information for requesting the user device to output a user interface for controlling the content, to the user device if control authority is set.

The server control method may further include, transmitting information for requesting external devices other than the user device among the plurality of devices to inactivate a user interface if the information for requesting to set control authority is received.

The server control method may further include, controlling the user device to display a user interface for displaying additional information regarding the content if control authority is set.

The server control method may further include, controlling the user device to display additional information regarding the content if control authority is set.

The server control method may further include receiving information for requesting to release control authority, from the user device; and changing control authority of the plurality of devices on the screen sharing service to a basic setup based on the received information for requesting to release control authority.

According to an aspect of another exemplary embodiment, there is provided a device control method for controlling a user device having a display apparatus, the device control method including displaying content by using a screen sharing service, on a screen of the display apparatus; transmitting information to a server requesting the user device have control authority of the screen sharing service; receiving authorization of control authority of the screen sharing service from the server; and transmitting a control command for controlling the screen sharing service to the server, based on the set control authority of the screen sharing service.

The device control method may further include, displaying additional information regarding the content on the user device if authorization of control authority is received from the server.

According to an aspect of an exemplary embodiment, there is provided a user device including a content sharing unit configured to share content provided by using a screen sharing service, with an external device; a control authority setup unit configured to set the user device and the external device to have control authority of the screen sharing service, wherein the control authority setup unit is further configured to transmit control authority setup information indicating that the user device has control authority of the screen sharing service, to the external device; and a content control unit configured to transmit a control command regarding the screen sharing service to the external device, based on the control authority.

The user device may further include a user interface providing unit for providing a user interface for displaying additional information regarding the content, if the control authority is set.

The control authority setup unit may be configured to restrict control authority of the user device on the screen sharing service if control authority setup information indicating that the external device has control authority of the screen sharing service is received from the external device, and the content control unit may be configured to no longer transmit the control command regarding the screen sharing service if control authority of the user device is restricted.

According to an aspect of an exemplary embodiment, there is provided a server including a content control unit configured to provide content to a user device and an external device by using a screen sharing service, and configured to control the screen sharing service; and a control authority setup unit configured to receive information requesting the user device have control authority of the screen sharing service, from the user device, and configured to set control authority by the user device and the external device of the screen sharing service based on the received information requesting control authority, wherein the content control unit is configured to receive a control command regarding the screen sharing service from the user device, and is configured to control the screen sharing service based on the control authority and the received control command.

According to an aspect of an exemplary embodiment, there is provided a user device including a content reception unit configured to receive content from a server by using a screen sharing service; a control authority setup unit configured to transmit information requesting the user device have control authority of the screen sharing service, to the server, and configured to receive authorization of the control authority from the server; and a content control unit configured to transmit a control command regarding the screen sharing service to the server based on the set control authority of the screen sharing service.

According to an aspect of another exemplary embodiment, there is provided a display method for displaying content provided by using a screen sharing service, on a user device, the display method including setting the user device to have control authority of the screen sharing service; splitting a screen of the user device for displaying the content if the control authority of the screen sharing service is set; and displaying the content and additional information regarding the content individually on split regions of the screen.

Whether to output the additional information may be determined according to a display mode of the user device.

The display mode may include a vertical display mode and a horizontal display mode of the user device.

According to an aspect of another exemplary embodiment, there is provided a computer-readable recording medium having recorded thereon a computer program for executing the device control method.

### BRIEF DESCRIPTION OF THE DRAWINGS

The above and other features and aspects will become more apparent by describing certain exemplary embodiments with reference to the accompanying drawings, in which:
FIG. 1 is a diagram showing a configuration of content sharing according to an exemplary embodiment;
FIG. 2 is a flowchart of a device control method for controlling shared content by setting a user device to have control authority of a screen sharing service;
FIG. 3 is a flowchart of a device control method allowing a user device to control a shared content output screen, according to an exemplary embodiment;
FIG. 4A is a diagram showing a configuration of direct content sharing between a user device and an external device, according to an exemplary embodiment;
FIG. 4B is a diagram showing a configuration of content sharing via an access point (AP) between a user device and an external device, according to an exemplary embodiment;
FIG. 4C is a diagram showing a configuration of content sharing via a network server between a user device and an external device, according to exemplary an embodiment;
FIG. 5 is a flowchart of a device control method for setting an external device to have control authority of a shared content output screen, according to an exemplary embodiment;
FIG. 6 is a diagram showing a configuration of sharing a content output screen, according to an exemplary embodiment;
FIG. 7 is a flowchart of a device control method for providing and sharing a content output screen by a server, according to an exemplary embodiment;
FIG. 8 is a flowchart of a device control method allowing a user device to control a content output screen provided and shared by a server, according to an exemplary embodiment;
FIG. 9 is a block diagram of a user device according to an exemplary embodiment;
FIG. 10 is a block diagram of a server for providing and sharing content, according to an exemplary embodiment;
FIG. 11 is a block diagram of a user device for receiving shared content from a server, according to an exemplary embodiment;
FIG. 12 is a diagram showing control authority setup user interfaces for setting and releasing control authority of a user device, according to an exemplary embodiment;
FIG. 13 is a diagram showing a user interface of a user device when an external device is set to have control authority, according to an exemplary embodiment; and
FIG. 14 is a diagram showing a user interface for displaying additional information regarding content on a user device set to have control authority, according to an exemplary embodiment.

### DETAILED DESCRIPTION OF EXEMPLARY EMBODIMENTS

Hereinafter, exemplary embodiments will be described in detail with reference to the attached drawings. The inventive concept may, however, be embodied in many different forms and should not be construed as being limited to the embodiments set forth herein. In the drawings, for clear explanation of the exemplary embodiments, parts not related to the explanation are not illustrated and similar reference numerals denote similar elements.

In this specification, it will be understood that when an element, such as a layer, a region, or a substrate, is referred to as being "on", "connected to", or "coupled to" another element, it may be directly on, connected, or coupled to the other element or intervening elements may be present. It will be further understood that the terms "comprises" and/or "comprising" specify the presence of stated features, integers, steps, operations, elements, and/or components, but do not preclude the presence or addition of one or more other features, integers, steps, operations, elements, components, and/or groups thereof, unless the context clearly indicates otherwise.

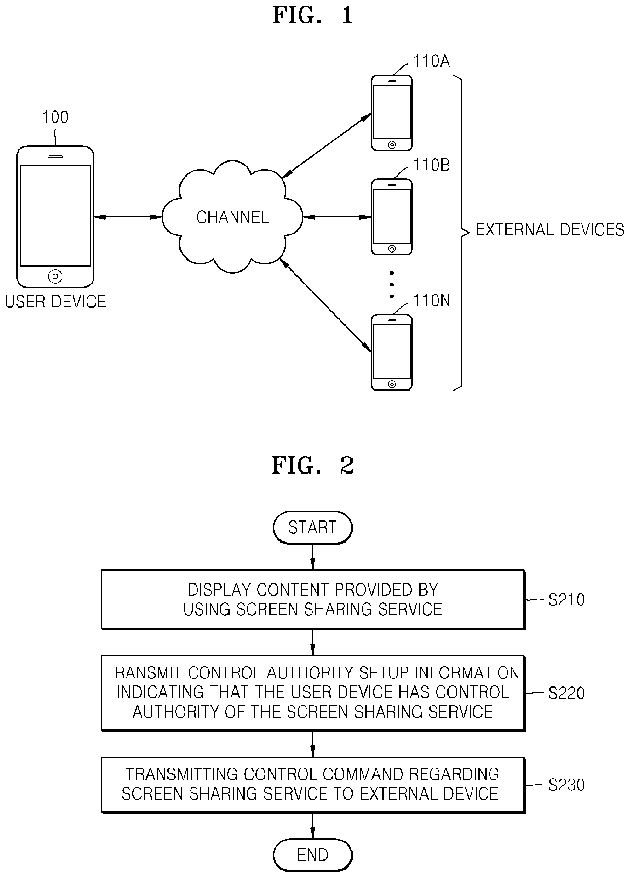

FIG. 1 is a diagram showing a configuration of sharing a content output screen by using a screen sharing service, according to an exemplary embodiment. Particularly, a user device 100 and external devices 110A - 110N, which share the content output screen, may be communicatively connected via a channel, and the user device 100 or the external devices 110A - 110N may control the content output screen shared between the user device 100 and the external devices 110A - 110N. As such, the user device 100 and the external devices 110A - 110N may share the same content output screen.

In accordance with one or more exemplary embodiments, there exists the assumption that a plurality of devices share a content output screen by using a screen sharing service. Also, the authority for controlling the content output screen may be described as control authority of the screen sharing service, and the content output screen may be controlled by transmitting a control command regarding the screen sharing service. However, exemplary embodiments are not limited to control authority of a service and a control command regarding the service. For example, the control authority may be control authority of content, and the control command may be a control command regarding the content.

Also, control authority may be authority for controlling a screen sharing service or content, and may be needed to use or edit the content. The control authority may include at least one of authority for reproducing content by a device, authority for turning to a page of a screen displayed on a device, authority for outputting information written on and input to a device by a user to devices which share a screen, and authority for displaying additional information regarding content on a device.

A control command may be, for example, a command for executing content, or for turning to a page of the content output on a screen.

The user device 100 and the external devices 110A - 110N may generate a channel, may participate in the generated channel to generate a session, and may transmit content or a control command regarding a screen sharing service, thereby providing the content by using the screen sharing service.

A screen sharing service may be a service for controlling content displayed on a plurality of devices. The screen sharing service may include, for example, a service for sharing a screen among a plurality of devices and a service for sharing written and input information regarding content. Also, the screen sharing service may include a service for turning to a page of a screen for outputting content, and a service for providing control authority of a shared screen to another device. Furthermore, the screen sharing service may be realized non-restrictively by using, for example, an application installed on a device.

Also, the screen sharing service refers to a service for sharing content among a plurality of devices in contrast to sharing content on the same display. For example, if a screen for outputting a document is shared, only the same page of the document may be output, and a resolution and a text size do not need to be the same.

The user device 100 and the external devices 110A - 110N may be communicable devices such as a mobile phone, a TV, a laptop computer, a PC, and a tablet PC.

For example, if one of the user device 100 and the external devices 110A - 110N, which output the same presentation content, turns to a presentation page, the user device 100 or one of the external devices 110A - 110N transmits a control command regarding the turned-to presentation page to the user device 100 and the external devices 110A - 110N. The user device 100 and the external devices 110A - 110N, which have received the control command, may turn to the same presentation page and thus may share the same screen regarding the content.

Here, the user device 100 and the external devices 110A - 110N may directly communicate with each other by using, for example, Wi-Fi or Bluetooth communication.

Also, one of the user device 100 and the external devices 110A- 110N may be set to have control authority of the screen sharing service. In this case, the control authority may be exclusive authority for restricting control authority of the screen sharing service by devices other than the device having control authority.

Here, if the user device 100 has control authority of the screen sharing service, in order to partially or entirely restrict control authority of the external devices 110A - 110N of the screen sharing service, the user device 100 that is set to have control authority may transmit control authority setup information regarding control authority of the screen sharing service to the external devices 110A - 110N which share a screen with the user device 100. In this case, the control authority setup information may include identification information for identifying the user device 100, and information indicating that the user device 100 is set to have control authority.

Also, the control authority setup information may include information for partially or entirely restricting control authority of the external devices 110 of the screen sharing service.

Otherwise, if one of the external devices 110A - 110N has control authority of the screen sharing service, the user device 100 may receive from one of the external devices 110A - 110N, for example external device 110A, control authority setup information regarding control authority of the external device 110A on the screen sharing service. Then, the user device 100 may restrict control authority of the user device 100 of the screen sharing service, based on the received control authority setup information, and control of the content is done by receiving a control command from the external device 110A.

The control authority setup information may be stored in the user device 100. Alternatively, the control authority setup information may be stored in both of the user device 100 and the external device 110A.

Here, from among the user device 100 and the external devices 110A - 110N, the device set to exclusively have control authority of a shared content output screen may be defined as a master device.

FIG. 2 is a flowchart of a device control method for controlling a shared content output screen by setting the user device 100 to have control authority of a screen sharing service, according to a complementary example.

Initially, the user device 100 displays content shared by using the screen sharing service for sharing the content output screen with the external devices 110A -110N (S210).

Then, according to an exemplary embodiment, the user device 100 may grant itself control authority of the screen sharing service. According to another exemplary embodiment, the user device 100 may be set to have control authority of the screen sharing service based on a user input, for example, a button selection.

Then, the user device 100 transmits control authority setup information indicating control authority to the external devices 110A - 110N which share the content output screen (S220). The control authority setup information may be information indicating that the user device 100 has control authority of the screen sharing service. Finally, if so desired, the user device 100 may transmit a control command to the external devices 110A - 110N.

Here, although not shown in FIG. 2, the external device 110 may be set to have authority for controlling the content output screen, based on the control authority setup information that indicates control authority of the user device 100. Further, if the user device 100 has control authority of the screen sharing service and receives from the external device 110A control authority setup information indicating that the external device 110A may be set to have control authority of the screen sharing service, the user device 100 may determine whether to authorize control authority of the external device 110A. Also, if setup of control authority is completed, the external device 110A may transmit to the user device 100 a message indicating that the setup of control authority is completed.

Then, the user device 100 may control the shared content by transmitting a control command regarding the screen sharing service to the external devices 110A - 110N based on control authority (S230).

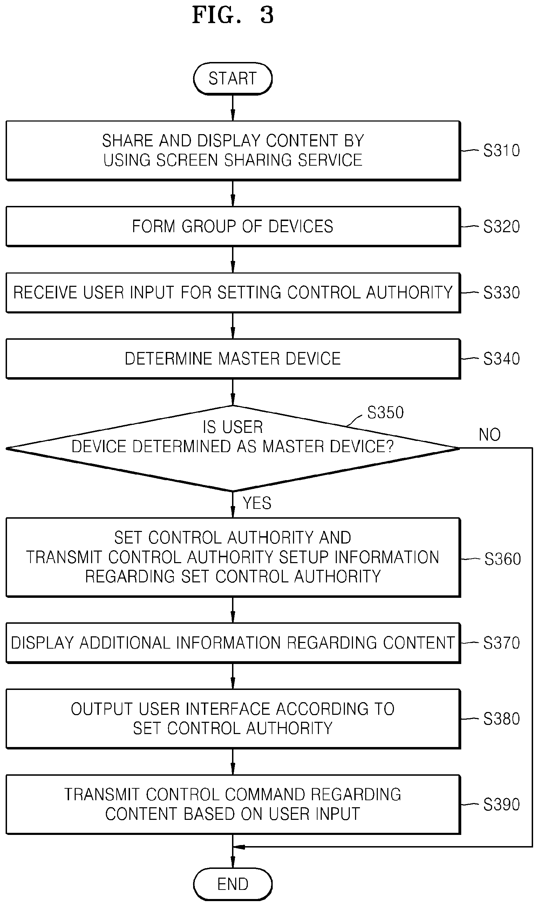

FIG. 3 is a flowchart of a device control method allowing the user device 100 to control a shared content output screen, according to an exemplary embodiment.

Initially, the user device 100 may share content with the external devices 110A - 110N via a channel, and may display the content on a screen of the user device 100 (S310).

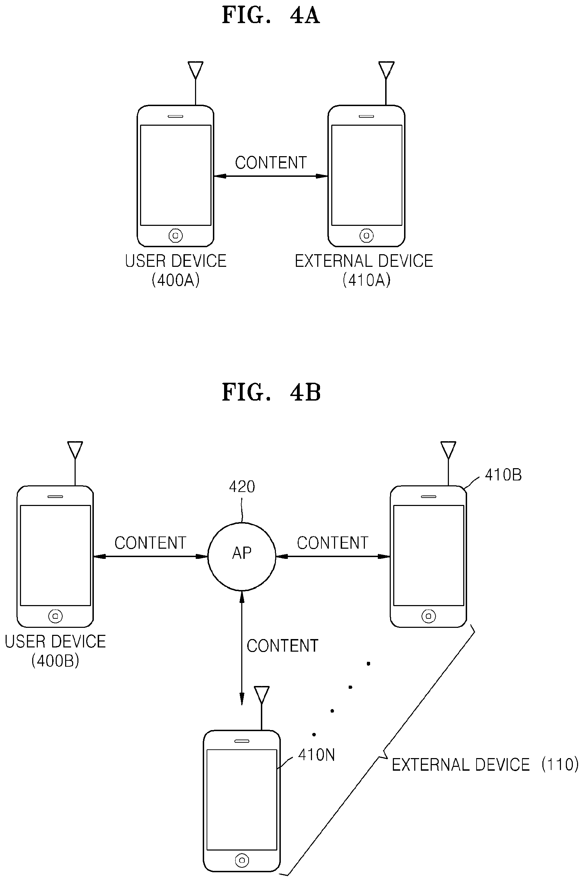

Here, the content may be shared by using various methods. Exemplary method of sharing the content are illustrated in FIGS. 4A through 4C.

Also, the user device 100 may form a group of devices with which the user device 100 shares the content (S320).

For example, the group may be formed to include the user device 100 and the external devices 110A - 110N which receive the content by using the same method as the user device 100.

Also, according to an exemplary embodiment, devices, which participate in the same channel, may be grouped into one group. For example, if a first device of a user who participates in a conference generates a channel for sharing a screen and a second device of another user participates in the channel generated by the first device such that a screen sharing service is provided, the first device and the second device may be grouped into the same group.

Then, the user device 100 may receive an input for setting the user device 100 to have control authority of a screen sharing service (S330). Whether to set the user device 100 as a master device having control authority of the screen sharing service is determined based on a user input for setting control authority (S340). Here, the user input for setting control authority may be an input for setting the user device 100 to have control authority of the screen sharing service.

For example, from among a first device and a second device which share a screen by using a screen sharing service, if the first device receives a user input, for example, a button selection, for setting control authority of the screen sharing service, the second device may also receive the user input for setting control authority of the screen sharing service. In this case, the first device may receive control authority setup information from the second device as well as a control command from the second device. Also, an identification value of the second device, for example, a media access control (MAC) address, may be received. Here, the first device may compare the last three digits of a MAC address of the first device to the last three digits of the MAC address of the second device and may determine to set the user device 100 as a master device if a number indicated by the last three digits of the MAC address of the first device is greater than the number indicated by the last three digits of the MAC address of the second device.

Here, an identification value of the user device 100 or the external device 110A may be a part of or the whole identification information of each device, for example, a MAC address.

According to an exemplary embodiment, when the user device 100 receives a user input, for example, a button selection, for setting control authority of a screen sharing service, the external device 110A may be already set as a master device. If the external device 110A is set as a master device, the user device 100 receives control authority setup information regarding control authority from the external device 110A. Thus, the user device 100 may have control authority of the screen sharing service of the user device 100 based on the control authority setup information received from the external device 110A.

For example, in accordance with an exemplary embodiment, a first device and a second device may share a screen by using a screen sharing service. Here, the first device or the second device may display a button for setting control authority. Initially, if a button for setting the second device to have control authority is input, the second device may be set as a master device exclusively having control authority of the screen sharing service. Then, if a button for setting the first device to have control authority is input, the first device may only restrictively have control authority for turning to a page because the second device has already been set as the master device with control authority of the screen sharing service.

Thus, if the user device 100 is determined to be a master device (S350), the user device 100 may be set to have control authority of the screen sharing service (S360). Also, if the user device 100 is set to have control authority, control authority setup information indicating that the user device 100 is set to have control authority of the screen sharing service may be transmitted to the external device 110A.

Here, operations S340 and S350 may be omitted.

Also, according to an exemplary embodiment, information for partially or entirely restricting control authority of the external device 110A, which receives the control authority setup information on the screen sharing service, may be transmitted together with the control authority setup information.

Here, the control authority setup information regarding control authority of the screen sharing service may be transmitted to the external devices 110A - 110N. In this case, if the group is formed in operation S320, the control authority setup information may be transmitted only to the external devices 110A - 110N included in the group.

Also, according to an exemplary embodiment, if the user device 100 has control authority, the control authority setup information indicating that the user device 100 is set to have control authority may be inserted into data to be transmitted from the user device 100 to the external devices 110A - 110N.

For example, if the control authority setup information indicating that the user device 100 is set to have control authority is represented as 'LOCK', data may be transmitted from the user device 100 to the external devices 110A - 110N by inserting 'LOCK' into a header of the data.

Also, according to an exemplary embodiment, the user device 100 may provide an attribute for only transmitting a control command of the user device 100, and therefore not transmitting a control command of the external device 110 having no control authority of the screen sharing service, to a channel formed between the user device 100 and the external devices 110A - 110N.

For example, if the user device 100 and the external devices 110 have different authorization pin codes and the authorization pin code of the user device 100 set to have control authority on the screen sharing service is '1234', the user device 100 may provide an attribute for transmitting only a control command sent from a device having the authorization pin code of '1234', to the channel formed between the user device 100 and the external devices 110A - 110N.

Also, according to the invention, if the user device 100 is set to have control authority of the screen sharing service, the user device 100 periodically transmits to the external devices 110A - 110N a heartbeat message indicating that the user device 100 continues to be set as having control authority of the screen sharing service. Here, the external devices 110A - 110N may control the content.

Further, the user device 100 may periodically transmit the control authority setup information regarding control authority of the user device 100 of the screen sharing service, as the heartbeat message indicating that the user device 100 is set to have control authority of the screen sharing service.

Then, additional information may be displayed on the user device 100 (S370).

Then, if control authority is set, the user device 100 may output a user interface (S380).

For example, as a master device, the user device 100 may output a tool window for editing content or a user interface for turning to a page.

Also, according to an exemplary embodiment, the user interface may be a user interface for displaying additional information regarding the content. Operation S370 may be included in operation S380.

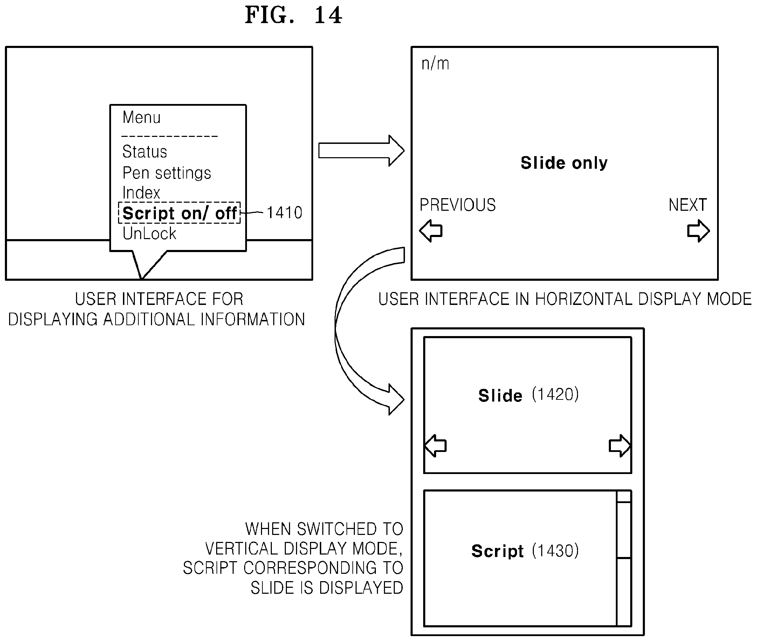

For example, the user device 100 may be set to have control authority of a screen sharing service while a presentation screen is shared. If the user device 100 is set to have control authority of the screen sharing service, as illustrated in FIG. 14, the user device 100 may output a button or menu 1410 for displaying additional information. If a user selects the button or menu 1410 for displaying the additional information, the user device 100 may output on a screen a script related to the shared presentation screen. For example, if the user device 100 and the external devices 110A - 110N share a screen of a particular page of presentation content, a script of that particular page may be output on the screen of the user device 100.

The user device 100 may determine whether to output, and how to output, the additional information according to a display mode of the user device 100.

For example, if the display mode of the user device 100 is a horizontal display mode, the user device 100 may only output a shared content output screen. In contrast, if the display mode of the user device 100 is a vertical display mode, the user device 100 may split the screen and may output the shared content output screen and the additional information script, thereby showing the content individually on the split regions of the screen as illustrated in at least FIG. 14.

Then, the user device 100 may transmit a control command for controlling content shared with the external devices 110A - 110N, to the external devices 110A - 110N based on control authority (S390).

Also, according to an exemplary embodiment, the external devices 110A - 110N, to which the control command is transmitted, may be restricted to devices authorized by the user device 100. That is, by transmitting the control command only to the devices authorized by the user device 100, only the external devices 110A - 110N authorized by the user device 100 may be controlled to share the same screen.

Then, although not shown in FIG. 3, control authority of the screen sharing service may be released.

According to an exemplary embodiment, if control authority by the user device 100 of the screen sharing service is released, control authority release information relating to the user device 100 may be transmitted to the external devices 110A - 110N. In this case, the control authority release information refers to information indicating that control authority has been released by the user device 100. Further, the control authority release information may be included in the control authority setup information.

For example, if a user selects a device control authority release option from the menu shown on a user interface, the user device 100 may change control authority of the screen sharing service to a basic setup and may transmit to the external devices 110A - 110N information indicating that control authority has been released by the user device 100.

Also, according to an exemplary embodiment, if control authority of the screen sharing service is released the heartbeat message indicating that the user device 100 is set to have control authority that is periodically transmitted to the external devices 110A - 110N may no longer be transmitted heartbeat message.

Furthermore, according to an exemplary embodiment, if the user device 100 is not included in the group for sharing the content output screen that is formed in operation S320, the user device 100 may release control authority of the screen sharing service.

FIG. 4A is a diagram showing a configuration for direct content sharing between the user device 400A and the external device 410A, according to an exemplary embodiment.

The user device 400A may directly share content with the external device 410A by transmitting the content stored in the user device 400A directly to the external device 410A or receiving the content stored in the external device 410A directly from the external device 410A.

Further, as illustrated in FIG. 4A, if the content is directly shared between the user device 400A and the external device 410A, the user device 400A and the external device 410A may be included in one group formed in operation S320. Also, a third external device that shares the same content with the external device 410A may also be included in the same group.

FIG. 4B is a diagram showing a configuration of content sharing via an access point (AP) 420 between the user device 400B and the external devices 410B - 410N, according to an exemplary embodiment.

The user device 400B may access the AP 420 and may share content by receiving the content via the AP 420. The content may be the content itself or may be information for accessing or downloading the content. For example, the information may include uniform resource locator (URL) information for accessing a server that stores the content.

For example, the user device 400B may enter a conference room having the AP 420 and proceeds to access the AP 420. The user device 400B may receive URL information indicating the location of a server that stores content, via the accessed AP 420. The user device 400B may accesses the server that stores the content, by using the URL information, and may receive the content accordingly. As such, the user device 400B may share the content with the external devices 410B - 410N which may receive the same content.

Here, the user device 400B may form a group that may include the user device 400B and the external devices 410B - 410N (S320), which access the same AP 420 and share the content.

The user device 400B may determine whether the external device 410A accesses the same the AP 420 and may then subsequently share the content, by receiving information for identifying the external device 410A that accesses the AP 420, or by receiving information regarding a content sharing method from the external device 410A via a channel formed between the user device 400B and the external device 410A.

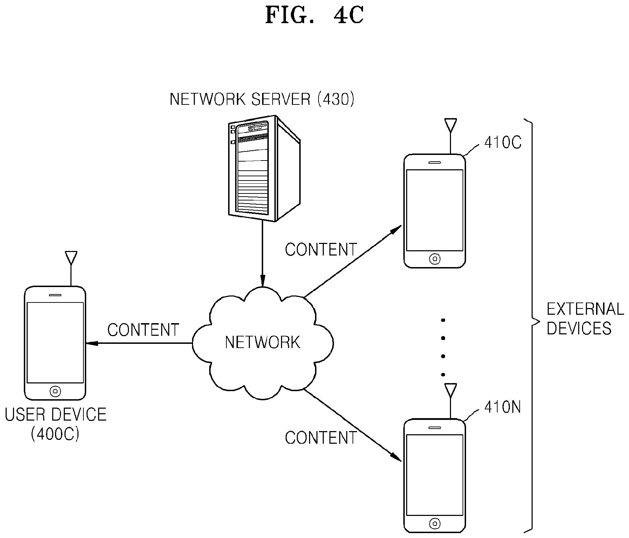

FIG. 4C is a diagram showing a configuration of content sharing via a network server 430 between the user device 400C and the external devices 410C - 410N, according to an exemplary embodiment.

Particularly, the user device 400C may share content with the external devices 410C - 410N by receiving from the network server 430 the content and information regarding the external devices 410C - 410N which receive the content from the network server 430.

Further, the user device 400C may form a group that includes the user device 400C and the external devices 410C - 410N (S320) based on the information regarding the external devices 410C - 410N that is received from the network server 430. The group may then receive the content from the network server 430.

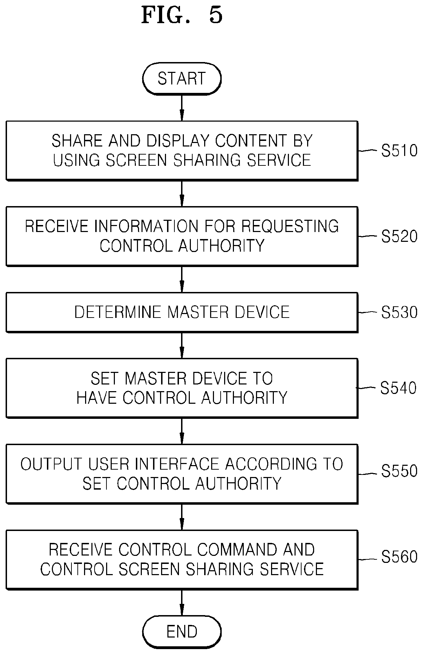

FIG. 5 is a flowchart of a device control method for setting an external device (110A - 110N or 410A - 410N) to have control authority of a screen sharing service, according to an exemplary embodiment. Particularly, FIG. 5 shows a process of a user device (100 or 400A - 400C) in response to an external device (110A - 110N or 410A - 410N)transmitting control authority setup information to the user device (100 or 400A - 400C)in order to be a master device having control authority.

Initially, the user device (100 or 400A - 400C)shares content with the external device (110A - 110N or 410A - 410N)and displays a content output screen on a screen of the user device (100 or 400A - 400C) (S510).

The content may be shared between the user device (100 or 400A - 400C)and the external device (110A - 110N or 410A - 410N)using various methods, for example, exemplary methods of sharing the content are illustrated in FIGS. 4A through 4C.

Also, as shown in FIG. 3, the user device (100 or 400A - 400C)may form a group of devices which share the content.

Further, the user device (100 or 400A - 400C)may receive from the external device (110A - 110N or 410A - 410N)control authority setup information requesting control authority of the screen sharing service (S520).

Particularly, the control authority setup information may be information indicating that the external device (110A - 110N or 410A - 410N)may be set to acquire control authority of the screen sharing service.

Also, according to an exemplary embodiment, in operation S520, information may be received for partially or entirely restricting control authority of the user device (100 or 400A - 400C)of the screen sharing service.

Based on the received control authority setup information, the user device (100 or 400A - 400C)determines whether to set the external device (110A - 110N or 410A - 410N)as a master device. The master device is a device having control authority of the screen sharing service (S530). If the external device (110A - 110N or 410A - 410N)is set as a master device, a control command from the external device (110A - 110N or 410A - 410N)may be received and the external device (110A - 110N or 410A - 410N)may be set to have control authority for controlling the screen of the user device (100 or 400A - 400C) (S560).

According to an exemplary embodiment, an identification value of the external device 110A may be received from the external device 110A. Further, identification values of a plurality of external devices (110A - 110N or 410A - 410N)may be received. Then, the external device 110A may be set as a master device regarding the screen sharing service according to the received identification values.

Particularly, the received identification values may be compared and the external device (110A - 110N or 410A - 410N)having the largest identification value may be determined as a master device.

According to an exemplary embodiment, after the external device (110A - 110N or 410A - 410N)is set to have control authority of the screen sharing service, information indicating that a third external device is set to have control authority of the screen sharing service may be received from the external device (110A - 110N or 410A - 410N). The user device (100 or 400A - 400C)may set control authority of the third external device on the shared content, based on the received control authority setup information. Then, a control command may be received from the third external device, and the shared content output by the user device (100 or 400A - 400C)may be controlled based on the received control command and control authority of the third external device.

For example, the user device 100 may share a presentation screen with the external device 110A and the third external device. While sharing, the external device 110A set as a master device may receive information indicating that the third external device is requesting control authority of a service for turning to a page. The user device 100 may then grant control authority of the screen sharing service by the third external device for turning to a page. Then, a control command for turning to a page may be received from the third external device, and the shared content output by the user device 100 may be turned to the page.

Then, the user device 100 may output a user interface on the screen according to control authority (S550).

According to an exemplary embodiment, if the external device 110A is set to have control authority of the screen sharing service, the user interface displayed on the content output screen may be inactivated.

For example, when the user device 100 displays a presentation screen and a user interface for turning to a page of presentation content, if the external device 110A is set to have control authority of a service of sharing the presentation screen, a user interface for turning to a page may be inactivated.

Further, the user device 100 may control the shared content by receiving a control command from the external device 110A having control authority (S560).

Although not shown in FIG. 5, control authority of the external device 110A of the screen sharing service may be released and may be changed to a basic setup.

According to an exemplary embodiment, the user device 100 may receive control authority release information from the external device 110A set to have control authority of the screen sharing service. The user device 100 may release control authority of the external device 110A of the screen sharing service based on received control authority release information.

Also, according to an exemplary embodiment, the user device 100 may periodically receive from the external device 110A a heartbeat message indicating that the external device 110A is set to have control authority of the screen sharing service.

If the heartbeat message is not received for a certain period of time, the user device 100 determines that control authority of the external device 110A on the screen sharing service is released and may change control authority of the external device 110A and control authority of the user device 100 to a basic setup.

Also, according to an exemplary embodiment, if the external device 110A is not included in a group of devices for sharing content, the user device 100 determines that control authority of the external device 110A of the screen sharing service is released and may change control authority of the external device 110A and control authority of the user device 100 to a basic setup.

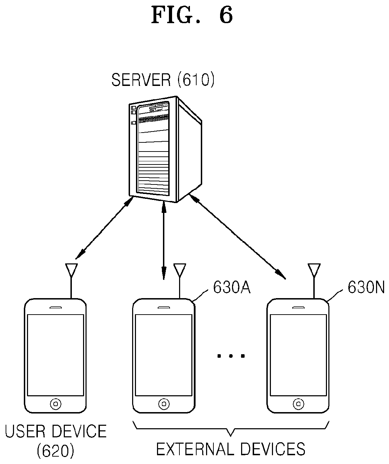

FIG. 6 is a diagram showing a configuration of content sharing according to another exemplary embodiment. FIG. 6 shows a configuration in which a user device 620 and external devices 630A - 630N access a server 610 that stores content and receive the content from the server 610, and the server 610 controls the content provided to each device, thereby achieving content sharing.

For example, if one of the user device 620 and the external devices 630A - 630N, which output the same presentation content, requests a turning of a page of the presentation content, the user device 620 or one of the external devices 630A - 630N that made the request may, transmit to the server 610 a control command regarding the request for the page turning. The server 610 may receive the control command and may control the presentation content output to the user device 620 and the external devices 630A - 630N and may turn to the requested page.

Also, the server 610 may set one of the user device 620 and the external devices 630A - 630N to have control authority of a screen sharing service. The control authority may be exclusive authority that restricts control authority of the screen sharing service by devices other than the device having control authority.

The server 610 may receive information requesting control authority of the screen sharing service, from one of the user device 620 and the external devices 630A - 630N. If the information requesting control authority of the screen sharing service is received, the server 610 may set control authority of the screen sharing service.

If control authority of the screen sharing service is set, a control command for controlling a content output screen may be received from the user device 620 or the external device 630A having control authority of the screen sharing service. The content output screen provided to each device may be controlled according to the received control command.

For example, the user device 620 set to have control authority by the server 610 transmits to the server 610 a control command for turning to a page of shared content. The server 610 may turn to the page of the content provided to the external devices 630A - 630N based on the received control command such that the user device 620 and the external devices 630A - 630N output the same page of the content, thereby achieving content sharing.

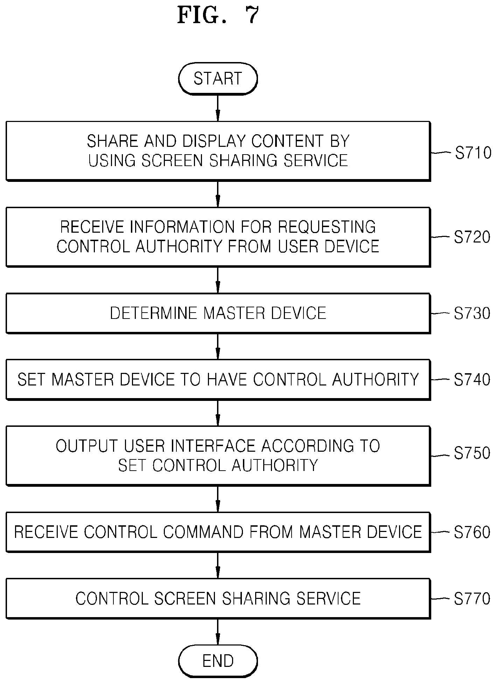

FIG. 7 is a flowchart of a device control method for providing content and a screen sharing service by the server 610, according to an exemplary embodiment.

Initially, the server 610 may provide content to the user device 620 and the external devices 630A - 630N, and may control a content output screen output by each device (S710).

Also, the server 610 may form a group including at least the user device 620 and the external devices 630A - 630N which receive the screen sharing service.

Then, the server 610 may receive information requesting control authority of the screen sharing service from the user device 620 (S720).

According to an exemplary embodiment, together with the information requesting control authority of the screen sharing service, information for partially or entirely restricting control authority of the external devices 630A - 630N of the screen sharing service may also be received.

The server 610 may determine whether to set the user device 620 as a master device having control authority of the screen sharing service provided to each device, based on the received information requesting control authority of the screen sharing service (S730). Then, the determined master device is set to have control authority of the screen sharing service (S740).

According to an exemplary embodiment, the information requesting control authority may be received from a plurality of devices among the user device 620 and the external devices 630A - 630N. In this case, the server 610 may also receive identification values of the devices. The server 610 may compare the identification values of the devices and may determine a device having the largest identification value as a master device. The determined master device may be set to have control authority of the screen sharing service.

Also, according to an exemplary embodiment, when one of the user device 620 and the external devices 630A - 630N is set as a master device having control authority, if information requesting control authority is received from a device other than the master device, the device that transmits the information requesting control authority may be set to have control authority of the screen sharing service, based on the already set control authority.

For example, initially the user device 620 is set as a master device having control authority of a screen sharing service for sharing a presentation content output screen. If information requesting control authority is then received from the external device 630A, the external device 630A may be set to have only partial control authority of the screen sharing service.

Also, according to an exemplary embodiment, the user device 620 may be set as a master device having control authority of the screen sharing service initially. If the information requesting the external device 630A have control authority of the screen sharing service is received from the current master user device 620, the external device 630A may be set to have control authority of the screen sharing service according to the received information requesting a change in the control authority.

If the user device 620 is set to have control authority, the server 610 may transmit to the external devices 630A - 630N control authority setup information indicating that control authority is set.

Also, according to an exemplary embodiment, if the user device 620 is set to have control authority of the screen sharing service, data may be transmitted from the user device 620 where control authority maintaining information for maintaining control authority is inserted into the data. If the control authority maintaining information is not present in the data received from the user device 620, control authority by the user device 620 of the screen sharing service may be released.

Furthermore, according to an exemplary embodiment, if control commands are received from the user device 620 and from the external devices 630A - 630N, the server 610 may apply only the control command of the user device 620 set to have control authority to control the screen sharing service.

According to an exemplary embodiment, if information for requesting to set control authority is received from the user device 620, and the user device 620 is set to have control authority of the screen sharing service, the server 610 may periodically receive from the user device 620 a heartbeat message for maintaining control authority.

Additionally, the server 610 may control a user interface output at the user device 620 and the external devices 630A - 630N according to the set control authority (S750).

For example, the user device 620 has control authority of the screen sharing service as the master device and may transmit a tool window for editing content or information requesting the output of a user interface for turning to a page. Also, the user device 620 may transmit information requesting that the external device 630, which has control authority of the screen sharing service restricted, inactivate the user interface for turning to a page.

Also, according to an exemplary embodiment, if the user device 620 is set to have control authority of the screen sharing service, additional information regarding content may be provided to the user device 620.

For example, if a presentation screen is shared and the user device 620 is set to have control authority, the server 610 may provide the user device 620 a button or menu output. If a user selects the button or menu, the server 610 may provide a script related to the output screen of the user device 620, to be displayed on a screen.

Then, the server 610 may receive a control command from the user device 620 set as a master device having control authority (S760), and may control the screen sharing service provided to the user device 620 and the external devices 630A - 630N, based on the received control command.

According to an exemplary embodiment, the external devices 630A - 630N, of which the content output screen is controlled based on the received control command, may be restricted to devices authorized by the server 610. The devices authorized by the server 610 may be determined based on a device list received from the user device 620 or a list previously determined by the server 610.

Then, although not shown in FIG. 7, control authority of the user device 620 of the screen sharing service may be released.

According to an exemplary embodiment, if control authority of the user device 620 of the screen sharing service is released, the server 610 may transmit to the user device 620, and the external devices 630A - 630N, control authority release information indicating that control authority is released.

Also, according to an exemplary embodiment, when the user device 620 is set to have control authority of the screen sharing service and a heartbeat message is periodically received from the user device 620, if the heartbeat message is not received for a certain period of time, control authority of the screen sharing service may be released and may be changed to a basic setup.

Furthermore, according to an exemplary embodiment, if the user device 620 is not included in a group for sharing content, the server 610 may release control authority of the user device 620 of the screen sharing service.

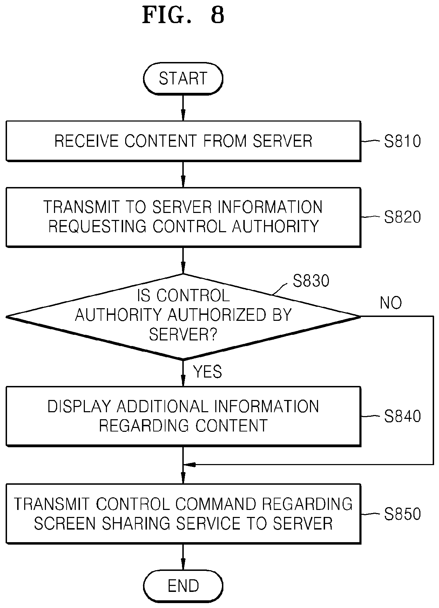

FIG. 8 is a flowchart of a device control method allowing the user device 620 to receive content from the server 610 and to control a content output screen shared with the external devices 630A - 630N, according to an exemplary embodiment.

Initially, the user device 620 receives from the server 610 content to be shared with the external devices 630A - 630N, and displays the received content on a screen of the user device 620 (S810).

Then, the user device 620 transmits to the server 610 information requesting to set control authority of a screen sharing service (S820).

Also, according to an exemplary embodiment, together with the information requesting to set control authority, information requesting to partially or entirely restrict control authority of the external devices 630A - 630N, which share the content, of the screen sharing service may be transmitted.

For example, if a user selects a button displayed as 'Lock' on the screen of the user device 620, the user device 620 may transmit to the server 610 information requesting the user device 620 have control authority of the screen sharing service while also restricting control authority by the external devices 630A - 630N of the screen sharing service.

Then, if the server 610 authorizes control authority of the screen sharing service (S830), the user device 620 may display additional information regarding the content on the screen (S840).

Also, if control authority of the screen sharing service is authorized (S830), control authority setup information indicating that the user device 620 is set to have control authority may be inserted into data to be transmitted to the server 610 during when the user device 620 has control authority of the screen sharing service.

Furthermore, according to the invention, if the user device 620 is set to have control authority of the screen sharing service, the user device 620 periodically transmits to the server 610 a heartbeat message indicating that the user device 620 is set to have control authority of the screen sharing service.

Further, the control authority setup information regarding control authority of the user device 620 may be transmitted as the heartbeat message.

Also, according to an exemplary embodiment, if control authority of the screen sharing service is authorized (S830), the user device 620 may output additional information regarding the content along with a user interface for displaying the additional information.

The user device 620 may determine whether to output the additional information, according to a display mode of the user device 620.

The user device 620 may transmit to the server 610 a control command for controlling the screen sharing service for sharing the content output screen with the external devices 630A - 630N.

Also, according to an exemplary embodiment, information regarding the external devices 630A - 630N, whose content output screens are controlled, may also be transmitted based on the control command transmitted to the server 610.

Then, although not shown in FIG. 8, control authority of the screen sharing service may be released.

According to an exemplary embodiment, if information requesting release of the control authority by the user device 620 of the screen sharing service is input to the user device 620, the information requesting release of the control authority by the user device 620 may be transmitted to the server 610.

Also, according to an exemplary embodiment, when the heartbeat message indicating that the user device 620 is set to have control authority of the screen sharing service is periodically transmitted to the server 610, if the information for requesting release of the control authority by the user device 620 of the screen sharing service is input to the user device 620, the heartbeat message may no longer be transmitted.

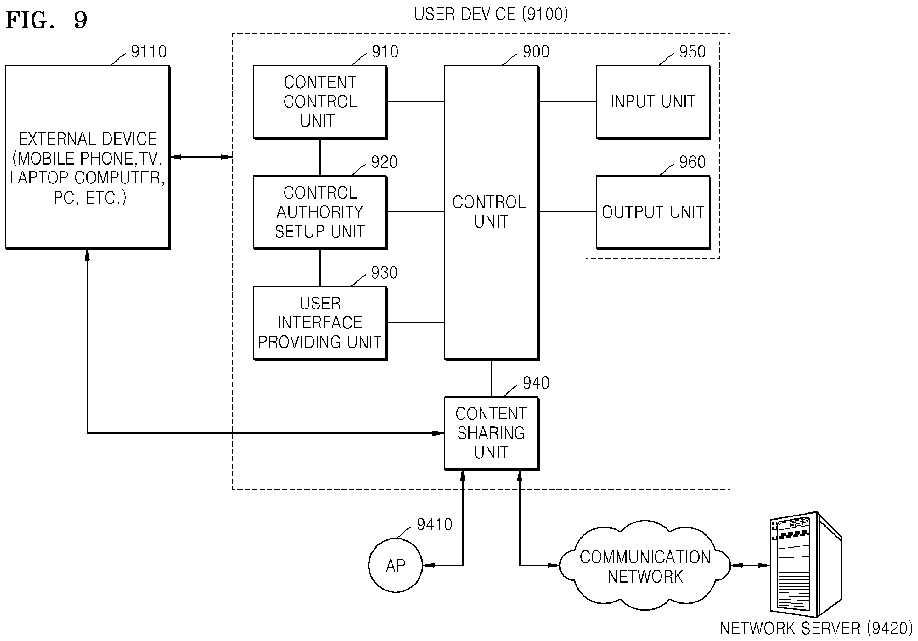

FIG. 9 is a block diagram of the user device 9100 according to an exemplary embodiment.

The user device 9100 may include a content sharing unit 940 for sharing content with the external device 9110 by transmitting or receiving the content to or from the external device 9110, a control authority setup unit 920 for setting the user device 9100 and the external device 9110 to have control authority of a screen sharing service, and transmitting to the external device 9110 control authority setup information regarding control authority by the user device 9100 of the screen sharing service, a content control unit 910 for transmitting to the external device 9110 a control command regarding a content output screen based on control authority of the screen sharing service, a user interface providing unit 930 for providing a user interface to the user device 9100, an input unit 950 for receiving a user input at the user device 9100, an output unit 960 for outputting the content and the user interface, and a control unit 900 for controlling other elements of the user device 9100.

Also, according to an exemplary embodiment, if the user device 9100 is set to have control authority of the screen sharing service, the user interface providing unit 930 may provide a user interface for displaying additional information regarding the screen sharing service, to be output by the output unit 960.

Furthermore, according to an exemplary embodiment, if information requesting control authority by the external device 9110 of the screen sharing service is received from the external device 9110, the control authority setup unit 920 may restrict control authority by the user device 9100 of the screen sharing service.

Further, according to an exemplary embodiment, if the control authority by the user device 9100 of the screen sharing service is restricted, the content control unit 910 may no longer transmit the control command regarding the external device 9110.

Also, the input unit 950 and the output unit 960 may be integrally formed as, for example, a touch screen.

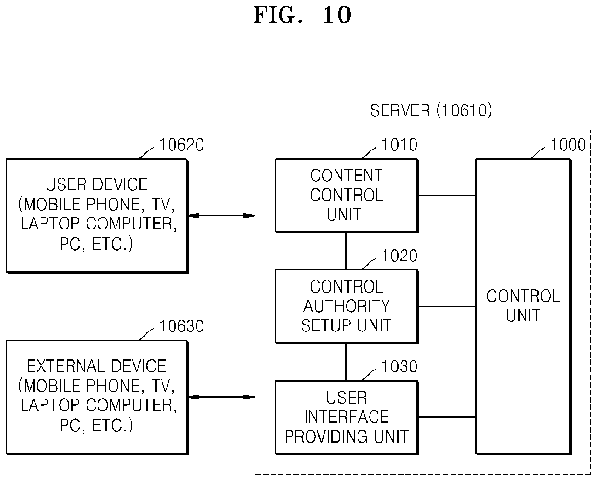

FIG. 10 is a block diagram of the server 10610 for providing content and a screen sharing service, according to an exemplary embodiment.

The server 10610 for providing a screen sharing service to the user device 10620 and the external device 10630 may include a content control unit 1010 for providing content to the user device 10620 and the external device 10630, and controlling a content output screen for outputting the provided content, a control authority setup unit 1020 for receiving from the user device 10620 information requesting the user device 10620 have control authority of the screen sharing service, and setting control authority by the user device 10620 and the external device 10630 of the screen sharing service based on the received information requesting control authority, a user interface providing unit 1030 for providing a user interface to the user device 10620 and the external device 10630, and a control unit 1000 for controlling other elements of the server 10610.

Also, according to an exemplary embodiment, the content control unit 1010 may receive a control command regarding the screen sharing service from the user device 10620, and may control the provided screen sharing service based on the control authority and the received control command.

Furthermore, according to an exemplary embodiment, if the user device 10620 is set to have control authority of the screen sharing service, the user interface providing unit 1030 may provide to the user device 620 additional information regarding the content or a user interface for displaying the additional information.

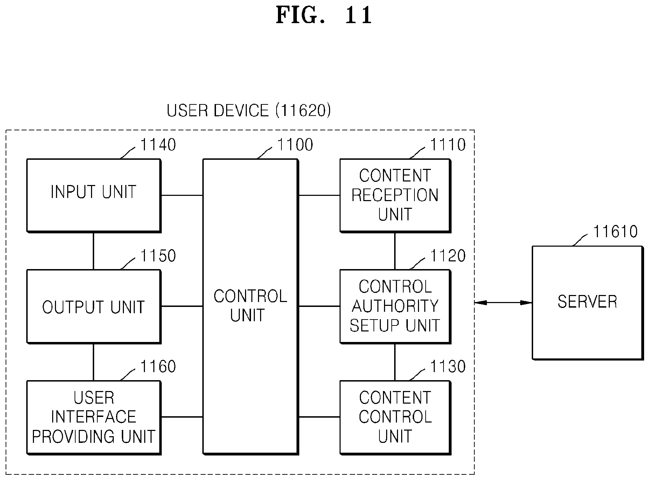

FIG. 11 is a block diagram of the user device 11620 for receiving shared content from the server 11610, according to an exemplary embodiment.

The user device 11620 may include a content reception unit 1110 for receiving content from the server 11610, a control authority setup unit 1120 for transmitting to the server 11610 information requesting the user device 620 have control authority of a screen sharing service, and receive authorization of control authority of the user device 11620 from the server 11610, a content control unit 1130 for transmitting a control command regarding the screen sharing service to the server 11610 based on control authority of the screen sharing service, which is authorized by the server 11610, a user interface providing unit 1160 for providing a user interface to the user device 11620, an input unit 1140 for receiving a user input regarding the user device 11620, an output unit 1150 for outputting the content and the user interface, and a control unit 1100 for controlling other elements of the user device 11620.

According to an exemplary embodiment, the content control unit 1130 may check whether control authority of the screen sharing service is authorized by the server 11610, and may transmit the control command regarding the screen sharing service to the server 11610 if control authority is authorized.

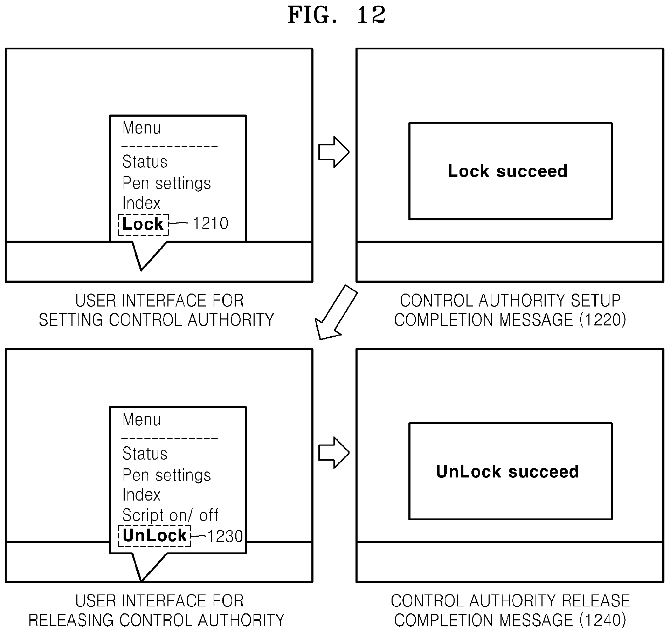

FIG. 12 is a diagram showing user interfaces for setting and releasing control authority of a user device (e.g., 100, 400A - 400C, 620, 9100, 10620, or 11620) according to an exemplary embodiment.

When the user device shares a content output screen with an external device (e.g., 110A - 110N, 410A- 410N, 630A - 630N, 9110, or 10630), the user device may output a user interface for setting control authority as represented by 'Lock' 1210 in FIG. 12.

If a user selects 'Lock' 1210, and thus the setup of control authority with regard to the user device and the external device is completed, as illustrated in FIG. 12, a control authority setup completion message 1220 may be output.

When control authority of the screen sharing service is set, the user device may output a user interface for releasing control authority as represented by 'UnLock' 1230 in FIG. 12.

If the user selects 'UnLock' 1230, and thus release of control authority with regard to the user device and the external device may be completed, as illustrated in FIG. 12, a control authority release completion message 1240 may be output.

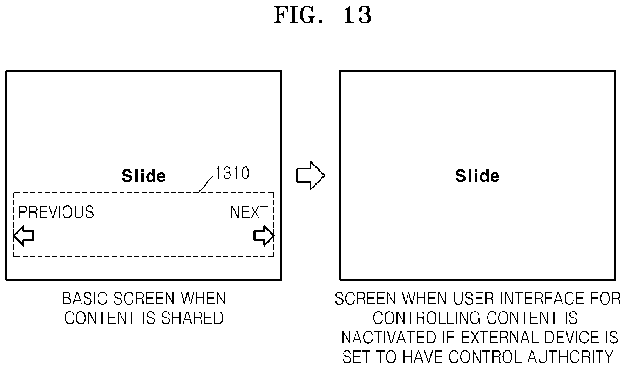

FIG. 13 is a diagram showing a user interface of the user device (e.g., 100, 400A - 400C, 620, 9100, 10620, or 11620) when the external device (e.g., 110A - 110N, 410A- 410N, 630A - 630N, 9110, or 10630) is set to have control authority, according to an exemplary embodiment.

According to an exemplary embodiment, if the external device is set to have control authority, as illustrated in FIG. 13, the user device may inactivate 'previous' and 'next' buttons 1310, which function as a user interface for turning to a page of content.

FIG. 14 is a diagram showing a user interface for displaying additional information regarding content on the user device (e.g., 100, 400A - 400C, 620, 9100, 10620, or 11620)set to have control authority, according to an exemplary embodiment.

According to an exemplary embodiment, if the user device transmits to the external device (e.g., 110A - 110N, 410A- 410N, 630A - 630N, 9110, or 10630), or the server information requesting control authority, and thus is set to have control authority of a screen sharing service, a user interface for displaying additional information may be output on a screen of the user device as represented by 'Script On/Off' 1410 of FIG. 14.

According to an exemplary embodiment, if the user device is set to have control authority of the screen sharing service, the screen of the user device, which displays content, may be split. The user device may display the content and the additional information regarding the content individually on the split regions of the screen.

For example, in FIG. 14, a presentation screen may be displayed on a 'Slide' region 1420 and a script related to the presentation screen may be displayed on a 'Script' region 1430.

Particularly, according to an exemplary embodiment, depending on the control authority of the user device of the screen sharing service, the screen of the user device that displays the content may be split. Then, the content and the additional information regarding the content may be displayed individually on the split regions of the screen.

For example, a user may set control authority by the user device of the screen sharing service to be toggled as '1' or '0' by selecting 'Script On/Off' 1410 in FIG. 14. If control authority by the user device of the screen sharing service is set as '1', the screen for displaying the content may be split into the 'Slide' region 1420 and the 'Script' region 1430. Presentation content shared with the external device may be output on the 'Slide' region 1420, and a script related to the presentation content may be output on the 'Script' region 1430.

Also, according to an exemplary embodiment, whether to output the additional information may be determined according to a display mode of the user device.

For example, as in FIG. 14, if the display mode of the user device is a horizontal display mode, only the content may be output on the screen. Alternatively, if the display mode of the user device is changed into a vertical display mode, the screen may be split, the content may be output on the 'Slide' region 1420, and the additional information regarding the output content may be output on the 'Script' region 1430.

One or more exemplary embodiments may be realized in a computer-readable recording medium, such as a program module executed by a computer. The computer-readable recording medium may be an arbitrary available medium accessible by a computer, and examples thereof include all volatile and non-volatile media and separable and non-separable media. Further, examples of the computer-readable recording medium may include a computer storage medium and a communication medium. Examples of the computer storage medium include all volatile and non-volatile media and separable and non-separable media, which have been implemented by an arbitrary method or technology, for storing information such as computer-readable commands, data structures, program modules, and other data. The communication medium typically includes a computer-readable command, a data structure, a program module, other data of a modulated data signal, or another transmission mechanism, and an example thereof includes an arbitrary information transmission medium.

While the exemplary embodiments have been particularly shown and described, it will be understood by those of ordinary skill in the art that various changes in form and details may be made therein without departing from the scope of the inventive concept as defined by the following claims.

## Claims

1. A method for sharing content with an external device (110), the method comprising:
displaying (S210) content on a display of a user device (100) and sharing the displayed content with the external device (110) by using a screen sharing service;
setting (S360) the user device (100) to have control authority of the screen sharing service based on a user input;
transmitting (S220) control authority setup information indicating that the user device (100) has the control authority of the screen sharing service, to the external device (110);
transmitting (S230) a control command to the external device (110) for controlling the shared content at the external device (110) according to the control authority of the screen sharing service; and
**characterised by** periodically transmitting to the external device (110) control authority maintaining information indicating that the user device (100) continues to be set as having the control authority of the screen sharing service.

2. The method of claim 1, further comprising:
determining a display mode of the user device (100);
splitting a screen displayed on the display of the user device (100) for displaying the shared content if it is determined that the display mode of the user device (100) is a vertical display mode; and
displaying (S370) the shared content and additional information regarding the shared content individually on the split screen regions.

3. The method of claim 1, wherein transmitting (S220) control authority setup information comprises transmitting (S360) control authority setup information and information for partially or entirely restricting control authority of the external device (110) over the screen sharing service, to the external device (110).

4. The method of claim 1, wherein the control command associated with the screen sharing service controls the screen sharing service based on a user input received at the user device (100).

5. The method of claim 1, further comprising:
inserting control authority setup information indicating that the user device (100) is set to have the control authority of the screen sharing service into data to be transmitted to the external device (110) if the control authority of the screen sharing service is set for the user device (100).

6. A user device (9100) comprising:
a content sharing unit (940);
a display (960); and
a control unit (900) configured to:
control the content sharing unit (940) to share content with an external (9110) device by using a screen sharing service;
control the display (960) to display (S210) the shared content;
set (S360) the user device (100) to have control authority of the screen sharing service based on a user input;
control the content sharing unit (940) to transmit (S220), to the external device (9110), control authority setup information indicating that the user device (9100) has the control authority of the screen sharing service;
control the content sharing unit (940) to transmit (S390) a control command to the external device (9110) for controlling content shared with the external device (110) according to the control authority of the screen sharing service; and
**characterised in that** the control unit is configured to control the content sharing unit (940) to periodically transmit to the external device (9110) control authority maintaining information indicating that the user device (9100) continues to be set as having the control authority of the screen sharing service.

7. The user device (9100) of claim 6, wherein the control unit (900) is further configured to:
determine a display mode of the user device (100);
split a screen displayed on the display of the user device (100) for displaying the shared content if it is determined that the display mode of the user device (100) is a vertical display mode; and
display (S370) the shared content and additional information regarding the shared content individually on the split screen regions.

8. A method for sharing content with an external device (630), the method comprising:
receiving (S810) at a user device (620) content which is shared with an external device (630) from a server (610) by using a screen sharing service;
transmitting (S820) to the server (610) information requesting the user device (620) to have the control authority of the screen sharing service;
receiving (S830) from the server (610) authorization that the user device (620) has the control authority of the screen sharing service;
setting (S360) the user device (100) to have control authority of the screen sharing service based on received control authority authorization from the server;
transmitting (S850) a control command for controlling the shared content at the external device (630) to the server (610), based on the control authority of the screen sharing service; and
**characterised by** periodically transmitting to the server (610) control authority maintaining information indicating that the user device (620) continues to be set as having the control authority of the screen sharing service.

9. The method of claim 8, further comprising:
determining a display mode of the user device (620);
splitting a screen displayed on the display of the user device (620) for displaying the shared content if it is determined that the display mode of the user device (620) is a vertical display mode; and
displaying (S370) the shared content and additional information regarding the shared content individually on the split screen regions.

10. A user device (11620) comprising:
a content reception unit (1110);
a display (1150); and
a control unit (1100) configured to:
control the content reception unit (1110) to receive (S810) content which is shared with an external device from a server (11610) by using a screen sharing service;
control the display (1150) to display (S210) the shared content;
control the user device (11620) to transmit (S820) information requesting the user device (11620) to have the control authority of the screen sharing service, to the server (11610);
control the content reception unit (1110) to receive (S830) authorization of the control authority from the server (11610);
set (S360) the user device (11620) to have control authority of the screen sharing service based on received control authority authorization from the server;
control the user device (11620) to transmit (S850) a control command for controlling the shared content at the external device to the server (11610) based on the set control authority of the screen sharing service; and
**characterised in that** the control unit (1100) is configured to control the user device (11620) to periodically transmit to the server (11610) control authority maintaining information indicating that the user device (11620) continues to be set as having the control authority of the screen sharing service.

11. The user device (9100) of claim 10, wherein the control unit (1150) is further configured to:
determine a display mode of the user device (11620);,
split a screen displayed on the display (1150) of the user device (11620) for displaying the shared content if it is determined that the display mode of the user device (11620) is a vertical display mode; and
control the display (1150) to display (S370) the shared content and additional information regarding the shared content individually on the split screen regions.

## Patentansprüche

1. Verfahren zum gemeinsamen Nutzen von Inhalt mit einem externen Gerät (110), wobei das Verfahren Folgendes beinhaltet:
Anzeigen (S210) von Inhalt auf einem Display eines Benutzergeräts (100) und gemeinsames Nutzen des angezeigten Inhalts mit dem externen Gerät (110) durch Nutzen eines Bildschirmfreigabedienstes;
Einstellen (S360) des Benutzergeräts (100), so dass es Steuerautorität über den Bildschirmfreigabedienst hat, auf der Basis einer Benutzereingabe;
Senden (S220) von Steuerautoritätseinrichtungsinformationen, die anzeigen, dass das Benutzergerät (100) die Steuerautorität über den Bildschirmfreigabedienst hat, zu dem externen Gerät (110);
Senden (S230) eines Steuerbefehls zu dem externen Gerät (110) zum Steuern des gemeinsam genutzten Inhalts an dem externen Gerät (110) gemäß der Steuerautorität über den Bildschirmfreigabedienst; und
**gekennzeichnet durch** periodisches Senden, zu dem externen Gerät (110), von Steuerautoritätsführungsinformationen, die anzeigen, dass das Benutzergerät (100) weiterhin so eingestellt ist, dass es Steuerautorität über den Bildschirmfreigabedienst hat.

2. Verfahren nach Anspruch 1, das ferner Folgendes beinhaltet:
Feststellen eines Anzeigemodus des Benutzergeräts (100);
Teilen eines auf dem Display des Benutzergeräts (100) angezeigten Bildschirms zum Anzeigen des gemeinsam genutzten Inhalts, wenn festgestellt wird, dass der Anzeigemodus des Benutzergeräts (100) ein vertikaler Anzeigemodus ist; und
Anzeigen (S370) des gemeinsam genutzten Inhalts und von zusätzlichen Informationen über den gemeinsam genutzten Inhalt individuell auf den geteilten Bildschirmregionen.

3. Verfahren nach Anspruch 1, wobei das Senden (S220) von Steuerautoritätseinrichtungsinformationen das Senden (S360) von Steuerautoritätseinrichtungsinformationen und Informationen zum teilweisen oder gänzlichen Beschränken der Steuerautorität des externen Geräts (110) über den Bildschirmfreigabedienst auf das externe Gerät (110) beinhaltet.

4. Verfahren nach Anspruch 1, wobei der mit dem Bildschirmfreigabedienst assoziierte Steuerbefehl den Bildschirmfreigabedienst auf der Basis einer an dem Benutzergerät (100) empfangenen Benutzereingabe steuert.

5. Verfahren nach Anspruch 1, das ferner Folgendes beinhaltet:
Einfiigen von Steuerautoritätseinrichtungsinformationen, die anzeigen, dass das Benutzergerät (100) so eingestellt ist, dass es Steuerautorität über den Benutzerfreigabedienst hat, in Daten zum Senden zu dem externen Gerät (110), wenn die Steuerautorität über den Bildschirmfreigabedienst für das Benutzergerät (100) eingestellt ist.

6. Benutzergerät (9100), das Folgendes umfasst:
eine Inhaltsfreigabeeinheit (940);
ein Display (960); und
eine Steuereinheit (900), konfiguriert zum:
Steuern der Inhaltsfreigabeeinheit (940) zum gemeinsamen Nutzen von Inhalt mit einem externen Gerät (9110) unter Nutzung eines Bildschirmfreigabedienstes;
Steuern des Display (960) zum Anzeigen (S210) des gemeinsam genutzten Inhalts;
Einstellen (S360) des Benutzergeräts (100) so, dass es Steuerautorität über den Bildschirmfreigabedienst hat, auf der Basis einer Benutzereingabe;
Steuern der Inhaltsfreigabeeinheit (940) zum Senden (S220), zu dem externen Gerät (9110), von Steuerautoritätseinrichtungsinformationen, die anzeigen, dass das Benutzergerät (9100) die Steuerautorität über den Bildschirmfreigabedienst hat;
Steuern der Inhaltsfreigabeeinheit zum Senden (S390) eines Steuerbefehls zum externen Gerät (9110) zum Steuern von Inhalt, der mit dem externen Gerät (110) gemeinsam genutzt wird, gemäß der Steuerautorität über den Bildschirmfreigabedienst; und
**dadurch gekennzeichnet, dass** die Steuereinheit zum Steuern der Inhaltsfreigabeeinheit (940) konfiguriert ist, um periodisch, zu dem externen Gerät (9110), Steuerautoritätsführungsinformationen zu senden, die anzeigen, dass das Benutzergerät (9100) weiterhin so eingestellt ist, dass es die Steuerautorität über den Bildschirmfreigabedienst hat.

7. Benutzergerät (9100) nach Anspruch 6, wobei die Steuereinheit (900) ferner konfiguriert ist zum:
Bestimmen eines Anzeigemodus des Benutzergeräts (100);
Teilen eines auf dem Display des Benutzergeräts (100) angezeigten Bildschirms zum Anzeigen des gemeinsam genutzten Inhalts, wenn festgestellt wird, dass der Anzeigemodus des Benutzergeräts (100) ein vertikaler Anzeigemodus ist; und
Anzeigen (S370) des gemeinsam genutzten Inhalts und zusätzlicher Informationen über den gemeinsam genutzten Inhalt individuell auf den geteilten Bildschirmregionen.

8. Verfahren zum gemeinsamen Nutzen von Inhalt mit einem externen Gerät (630), wobei das Verfahren Folgendes beinhaltet:
Empfangen (S810), an einem Benutzergerät (620), von Inhalt, der mit einem externen Gerät (630) gemeinsam genutzt wird, von einem Server (610) durch Nutzen eines Bildschirmfreigabedienstes;
Senden (S820), zu dem Server (610), von Informationen zum Anfordern, dass das Benutzergerät (26) die Steuerautorität über den Bildschirmfreigabedienst hat;
Empfangen (S830), von dem Server (610), einer Autorisierung, dass das Benutzergerät (620) die Steuerautorität über den Bildschirmfreigabedienst hat;
Einstellen (S360) des Benutzergeräts (100) so, dass es Steuerautorität über den Bildschirmfreigabedienst hat, auf der Basis einer empfangenen Steuerautoritätsautorisierung von dem Server;
Senden (S850) eines Steuerbefehls zum Steuern des gemeinsam genutzten Inhalts an dem externen Gerät (630) zu dem Server (610) auf der Basis der Steuerautorität des Bildschirmfreigabedienstes; und
**gekennzeichnet durch** periodisches Senden, zu dem Server (610), von Steuerautoritätsführungsinformationen, die anzeigen, dass das Benutzergerät (620) weiterhin so eingestellt ist, dass es die Steuerautorität über den Bildschirmfreigabedienst hat.

9. Verfahren nach Anspruch 8, das ferner Folgendes beinhaltet:
Feststellen eines Anzeigemodus des Benutzergeräts (620);
Teilen eines auf dem Display des Benutzergeräts (620) angezeigten Bildschirms zum Anzeigen des gemeinsam genutzten Inhalts, wenn festgestellt wird, dass der Anzeigemodus des Benutzergeräts (620) ein vertikaler Anzeigemodus ist; und
Anzeigen (S370) des gemeinsam genutzten Inhalts und zusätzlicher Informationen über den gemeinsam genutzten Inhalt individuell auf den geteilten Bildschirmregionen.

10. Benutzergerät (11620), das Folgendes umfasst:
eine Inhaltsempfangseinheit (1110);
ein Display (1150); und
eine Steuereinheit (1100), konfiguriert zum:
Steuern der Inhaltsempfangseinheit (1110) zum Empfangen (S810) von gemeinsam mit einem externen Gerät benutztem Inhalt von einem Server (11610) durch Nutzen eines Bildschirmfreigabedienstes;
Steuern des Display (1150) zum Anzeigen (S210) des gemeinsam genutzten Inhalts;
Steuern des Benutzergeräts (11620) zum Senden (S820) von Informationen zum Anfordern, dass das Benutzergerät (11620) die Steuerautorität über den Bildschirmfreigabedienst hat, zu dem Server (11610);
Steuern der Inhaltsempfangseinheit (1110) zum Empfangen (S830) einer Autorisierung der Steuerautorität von dem Server (11610);
Einstellen (S360) des Benutzergeräts (11620) so, dass es Steuerautorität über den Bildschirmfreigabedienst hat, auf der Basis einer empfangenen Steuerautoritätsautorisierung vom Server;
Steuern des Benutzergeräts (11620) zum Senden (S850) eines Steuerbefehls zum Steuern des gemeinsam genutzten Inhalts am externen Gerät zu dem Server (11610) auf der Basis der eingestellten Steuerautorität über den Bildschirmfreigabedienst; und
**dadurch gekennzeichnet, dass** die Steuereinheit (1100) so konfiguriert ist, dass sie das Benutzergerät (11620) zum periodischen Senden, zum Server (11610), von Steuerautoritätsführungsinformationen steuert, um anzuzeigen, dass das Benutzergerät (11620) weiterhin so eingestellt ist, das es die Steuerautorität über den Bildschirmfreigabedienst hat.

11. Benutzergerät (9100) nach Anspruch 10, wobei die Steuereinheit (1150) ferner konfiguriert ist zum:
Feststellen eines Anzeigemodus des Benutzergeräts (11620);
Teilen eines auf dem Display (1150) des Benutzergeräts (11620) angezeigten Bildschirms zum Anzeigen des gemeinsam genutzten Inhalts, wenn festgestellt wird, dass der Anzeigemodus des Benutzergeräts (11620) ein vertikaler Anzeigemodus ist; und
Steuern des Display (1150) zum Anzeigen (S370) des gemeinsam genutzten Inhalts und zusätzlicher Informationen über den gemeinsam genutzten Inhalt individuell auf den geteilten Bildschirmregionen.

## Revendications

1. Un procédé de partage de contenus avec un dispositif externe (110), le procédé comprenant :
l'affichage (S210) de contenus sur un dispositif d'affichage d'un dispositif d'utilisateur (100) et le partage des contenus affichés avec le dispositif externe (110) au moyen d'un service de partage d'écran,
la définition (S360) du dispositif d'utilisateur (100) de façon à posséder l'autorité de commande du service de partage d'écran en fonction d'une entrée d'utilisateur,
la transmission (S220) d'informations d'établissement d'autorité de commande indiquant que le dispositif d'utilisateur (100) possède l'autorité de commande du service de partage d'écran au dispositif externe (110),
la transmission (S230) d'une instruction de commande au dispositif externe (110) destinée à la commande des contenus partagés au niveau du dispositif externe (110) en fonction de l'autorité de commande du service de partage d'écran, et
**caractérisé par** la transmission périodique au dispositif externe (110) d'informations de maintien d'autorité de commande indiquant que le dispositif d'utilisateur (100) continue à être défini comme possédant l'autorité de commande du service de partage d'écran.

2. Le procédé selon la Revendication 1, comprenant en outre :
la détermination d'un mode d'affichage du dispositif d'utilisateur (100),
la division d'un écran affiché sur le dispositif d'affichage du dispositif d'utilisateur (100) destiné à l'affichage des contenus partagés s'il est déterminé que le mode d'affichage du dispositif d'utilisateur (100) est un mode d'affichage vertical, et
l'affichage (S370) des contenus partagés et d'informations additionnelles concernant les contenus partagés individuellement dans des zones de l'écran divisé.

3. Le procédé selon la Revendication 1, où la transmission (S220) d'informations d'établissement d'autorité de commande comprend la transmission (S360) d'informations d'établissement d'autorité de commande et d'informations destinées à restreindre partiellement ou totalement l'autorité de commande du dispositif externe (110) sur le service de partage d'écran au dispositif externe (110).

4. Le procédé selon la Revendication 1, où l'instruction de commande associée au service de partage d'écran commande le service de partage d'écran en fonction d'une entrée d'utilisateur reçue au niveau du dispositif d'utilisateur (100).

5. Le procédé selon la Revendication 1, comprenant en outre :
l'insertion d'informations d'établissement d'autorité de commande indiquant que le dispositif d'utilisateur (100) est défini de façon à posséder l'autorité de commande du service de partage d'écran dans des données à transmettre au dispositif externe (110) si l'autorité de commande du service de partage d'écran est définie pour le dispositif d'utilisateur (100).

6. Un dispositif d'utilisateur (9100) comprenant :
une unité de partage de contenus (940),
une unité d'affichage (960), et
une unité de commande (900) configurée de façon à :
commander l'unité de partage de contenus (940) de façon à partager des contenus avec un dispositif externe (9110) au moyen d'un service de partage d'écran,
commander le dispositif d'affichage (960) de façon à afficher (S210) les contenus partagés,
définir (S360) le dispositif d'utilisateur (100) de façon à posséder une autorité de commande du service de partage d'écran en fonction d'une entrée d'utilisateur,
commander l'unité de partage de contenus (940) de façon à transmettre (S220), au dispositif externe (9110), des informations d'établissement d'autorité de commande indiquant que le dispositif d'utilisateur (9100) possède l'autorité de commande du service de partage d'écran,
commander l'unité de partage de contenus (940) de façon à transmettre (S390) une instruction de commande au dispositif externe (9110) destinée à la commande de contenus partagés avec le dispositif externe (110) en fonction de l'autorité de commande du service de partage d'écran, et
**caractérisé en ce que** l'unité de commande est configurée de façon à commander l'unité de partage de contenus (940) de façon à transmettre périodiquement au dispositif externe (9110) des informations de maintien d'autorité de commande indiquant que le dispositif d'utilisateur (9100) continue à être défini comme possédant l'autorité de commande du service de partage d'écran.

7. Le dispositif d'utilisateur (9100) selon la Revendication 6, où l'unité de commande (900) est configurée en outre de façon à :
déterminer un mode d'affichage du dispositif d'utilisateur (100),
diviser un écran affiché sur le dispositif d'affichage du dispositif d'utilisateur (100) destiné à l'affichage des contenus partagés s'il est déterminé que le mode d'affichage du dispositif d'utilisateur (100) est un mode d'affichage vertical, et
afficher (S370) les contenus partagés et des informations additionnelles concernant les contenus partagés individuellement dans des zones de l'écran divisé.

8. Un procédé de partage de contenus avec un dispositif externe (630), le procédé comprenant :
la réception (S810) au niveau d'un dispositif d'utilisateur (620) de contenus qui sont partagés avec un dispositif externe (630) à partir d'un serveur (610) au moyen d'un service de partage d'écran,
la transmission (S820) au serveur (610) d'informations demandant que le dispositif d'utilisateur (620) possède l'autorité de commande du service de partage d'écran,
la réception (S830) à partir du serveur (610) d'une autorisation indiquant que le dispositif d'utilisateur (620) possède l'autorité de commande du service de partage d'écran,
la définition (S360) du dispositif d'utilisateur (100) de façon à posséder une autorité de commande du service de partage d'écran en fonction d'une autorisation d'autorité de commande reçue à partir du serveur,
la transmission (S850) d'une instruction de commande destinée à la commande des contenus partagés au niveau du dispositif externe (630) au serveur (610), en fonction de l'autorité de commande du service de partage d'écran, et
**caractérisé par** la transmission périodique au serveur (610) d'informations de maintien d'autorité de commande indiquant que le dispositif d'utilisateur (620) continue à être défini comme possédant l'autorité de commande du service de partage d'écran.

9. Le procédé selon la Revendication 8, comprenant en outre :
la détermination d'un mode d'affichage du dispositif d'utilisateur (620),
la division d'un écran affiché sur le dispositif d'affichage du dispositif d'utilisateur (620) destiné à l'affichage des contenus partagés s'il est déterminé que le mode d'affichage du dispositif d'utilisateur (620) est un mode d'affichage vertical, et
l'affichage (S370) des contenus partagés et d'informations additionnelles concernant les contenus partagés individuellement dans des zones de l'écran divisé.

10. Un dispositif d'utilisateur (11620) comprenant :
une unité de réception de contenus (1110),
une unité d'affichage (1150), et
une unité de commande (1100) configurée de façon à :
commander l'unité de réception de contenus (1110) de façon à recevoir (S810) des contenus qui sont partagés avec un dispositif externe à partir d'un serveur (11610) au moyen d'un service de partage d'écran,
commander le dispositif d'affichage (1150) de façon à afficher (S210) les contenus partagés,
commander le dispositif d'utilisateur (11620) de façon à transmettre (S820) des informations demandant que le dispositif d'utilisateur (11620) possède l'autorité de commande du service de partage d'écran au serveur (11610),
commander l'unité de réception de contenus (1110) de façon à recevoir (S830) une autorisation de l'autorité de commande à partir du serveur (11610),
définir (S360) le dispositif d'utilisateur (11620) de façon à posséder une autorité de commande du service de partage d'écran en fonction de l'autorisation d'autorité de commande reçue à partir du serveur,
commander le dispositif d'utilisateur (11620) de façon à transmettre (S850) une instruction de commande destinée à la commande des contenus partagés au niveau du dispositif externe au serveur (11610) en fonction de l'autorité de commande définie du service de partage d'écran, et
**caractérisé en ce que** l'unité de commande (1100) est configurée de façon à commander le dispositif d'utilisateur (11620) de façon à transmettre périodiquement au serveur (11610) des informations de maintien d'autorité de commande indiquant que le dispositif d'utilisateur (11620) continue à être défini comme possédant l'autorité de commande du service de partage d'écran.

11. Le dispositif d'utilisateur (9100) selon la Revendication 10, où l'unité de commande (1150) est configurée en outre de façon à :
déterminer un mode d'affichage du dispositif d'utilisateur (11620),
diviser un écran affiché sur le dispositif d'affichage (1150) du dispositif d'utilisateur (11620) destiné à l'affichage des contenus partagés s'il est déterminé que le mode d'affichage du dispositif d'utilisateur (11620) est un mode d'affichage vertical, et
commander le dispositif d'affichage (1150) de façon à afficher (S370) les contenus partagés et des informations additionnelles concernant les contenus partagés individuellement dans des zones de l'écran divisé.
